# FASCICULE DE BREVET EUROPEEN

(11) **EP 2 794 440 B1**
(45) Date de publication et mention de la délivrance du brevet: **30.12.2015**
(21) Numéro de dépôt: 12795543.3
(22) Date de dépôt: 14.11.2012
(51) Int. Cl.: B65H 1/02, B65H 1/26, B65G 49/00

(54) **INSTALLATION DE TRAITEMENT D'OBJETS PLATS EMPILÉS SUR CHANT, PROCÉDÉ DE DÉCHARGEMENT D'OBJETS PLATS EMPILÉS SUR CHANT**
ANLAGE ZUR VERARBEITUNG VON GESTAPELTEN FLACHEN HOCHKANTIGEN GEGENSTÄNDEN, VERFAHREN ZUM ENTLADEN VON GESTAPELTEN FLACHEN HOCHKANTIGEN GEGENSTÄNDEN
FACILITY FOR PROCESSING STACKED FLAT ON-EDGE OBJECTS, METHOD FOR UNLOADING STACKED FLAT ON-EDGE OBJECTS

(30) Priorité: 23.12.2011 FR 1162390
(43) Date de publication de la demande: 29.10.2014
(73) Titulaire: Solystic, 92220 Bagneux (FR)
(72) Inventeur: CARON, Arnaud, 31000 Toulouse (FR); HUGUES, Damien, 26120 Upie (FR); CHIDAINE, Benoît, 69006 Lyon (FR); DAUVERGNE, Mickaël, F-26600 Mercurol (FR)
(74) Mandataire: Prugneau, Philippe
(86) Numéro de dépôt international: PCT/FR2012/052623
(87) Numéro de publication internationale: WO 2013/093259

(56) Documents cités:
- US-A1- 2006 056 954
- US-A1- 2009 028 678

## Description

### Domaine technique

L'invention concerne de façon générale une installation de traitement d'objets plats empilés sur chant comportant au moins une première et une seconde unité de stockage, un chariot de transport pourvu d'un caisson apte à recevoir les objets plats pour les transporter entre les première et seconde unités de stockage, les première et seconde unités de stockage comportant respectivement au moins une zone de chargement, une zone de stockage, chacune apte à recevoir une pile d'objets plats sur chant avant, après transport, le caisson comportant une paroi de fond de laquelle s'étend au moins une paroi d'extrémité en regard de laquelle une ouverture est prévue.

L'invention concerne également un procédé de déchargement d'objets plats empilés sur chant au cours duquel, avant son transport, on stocke la pile d'objet plats sur une zone de chargement, on charge la pile d'objets plats sur un chariot de transport pourvu d'un caisson apte à recevoir les objets plats empilés sur chant et comportant une paroi de fond de laquelle s'étend au moins une paroi d'extrémité en regard de laquelle une ouverture est prévue, puis on transporte la pile d'objets plats au moyen du chariot, on décharge la pile d'objets plats et on la place sur une zone de stockage.

Au sens de l'invention, un objet plat désigne notamment, mais non exclusivement, un envoi postal. Les envois postaux, susceptibles d'être traités grâce à l'installation de traitement de l'invention, peuvent présenter des dimensions variables, mais également des caractéristiques mécaniques variables, en particulier en ce qui concerne leur rigidité. Ces envois postaux peuvent être, entre autres, une lettre simple, un magazine, une enveloppe avec ou sans fenêtre, un journal, ou encore un catalogue présenté dans une enveloppe en matière plastique ou en papier, avec ou sans soufflet.

### Technique antérieure

De manière connue, des installations de traitement d'objets plats empilés sur chant sont rencontrées par exemple dans les centres de tris postaux (cf. US 2009/028678 A1). Une telle installation de traitement comprend des unités de stockage entre lesquelles les objets plats empilés sont déplacés au moyen par exemple de bacs ou de chariots. Les piles d'objets plats doivent ainsi être chargées manuellement d'une première unité de stockage dans le chariot de transport puis déchargées du chariot de transport dans la seconde unité de stockage avant de pouvoir être transférées vers une zone de traitement, par exemple une zone de tri des objets plats. Ces manipulations de piles d'objets plats sur chant sont laborieuses et répétitives, elles imposent des mouvements peu ergonomiques, d'où des rendements faibles et des coûts de traitement élevés.

### Exposé de l'invention

Le but de l'invention est de remédier à ces inconvénients en proposant une installation de traitement d'objets plats empilés sur chant et un procédé de déchargement d'objets plats empilés sur chant facilitant la manipulation des piles d'objets plats sur chant et le transfert de ces piles d'objets plats au moyen d'un chariot de transport entre deux unités de stockage.

A cet effet, l'invention a pour objet une installation de traitement d'objets plats empilés sur chant selon le sujet de la revendication 1.

L'idée à la base de l'invention est de prévoir une zone de déchargement intermédiaire entre le chariot de transport et la zone de stockage, cette zone de déchargement étant mobile pour s'adapter successivement à la position des objets plats dans le chariot puis à celle de la zone de stockage. Ainsi, la zone de déchargement permet de limiter les mouvements de l'opérateur pour décharger les objets plats et permet d'atteindre un rendement supérieur pour le traitement des objets plats.

L'installation de traitement selon l'invention peut avantageusement présenter les particularités suivantes :
- elle peut comporter au moins une barre d'extraction couplée à la zone de déchargement par rapport à laquelle elle est montée mobile en translation entre une position entrée dans laquelle elle est au moins en partie escamotée sous la zone de déchargement et une position sortie dans laquelle elle s'étend au-delà de la zone de déchargement à l'opposé de la zone de stockage, la paroi de fond pouvant comporter au moins une rainure de fond apte à recevoir la barre d'extraction entre ses positions entrée et sortie de sorte que la barre d'extraction passe sous les objets plats empilés dans le caisson, la paroi d'extrémité pouvant comporter au moins une fente d'extrémité s'étendant de la paroi de fond et débouchant en haut de la paroi d'extrémité, la fente d'extrémité étant apte à autoriser le passage de la barre d'extraction entre ses positions entrée et sortie et entre les positions de transfert et de déchargement de la zone de déchargement ;
- elle peut comporter au moins une butée avant couplée en translation à la barre d'extraction et mobile entre une position inactive dans laquelle la butée avant est au moins en partie escamotée sous la zone de déchargement et une position active dans laquelle la butée avant dépasse au-dessus de la zone de déchargement pour servir d'appui à l'avant de la pile d'objets plats ;
- la zone de déchargement est traversée par au moins une fente de déchargement prévue en regard de la barre d'extraction de sorte que la barre d'extraction soit apte à au moins affleurer la zone de déchargement dans la position entrée de la barre d'extraction, la fente de déchargement autorisant le passage de la butée avant dans sa position active entre les positions entrée et sortie de la barre d'extraction ;
- la seconde unité de stockage comporte au moins une palette principale mobile en translation, dans un plan sensiblement parallèle à la zone de stockage, entre une position avant déchargement dans laquelle elle est apte à être plaquée à l'arrière de la pile d'objets plats portée par un chariot de transport placé en regard de la zone de déchargement et une position de transfert dans laquelle elle est au-dessus de la zone de stockage ;
- l'extrémité libre de la zone de chargement de la première unité de stockage en regard de laquelle le chariot de transport peut être placé, est prévue à une première hauteur au moins égale à la seconde hauteur de la base de l'ouverture du caisson de sorte que la pile d'objets plats puisse être chargée dans le caisson sans être soulevée.

L'invention a également pour objet un procédé de déchargement d'objets plats empilés sur chant selon le sujet de la revendication 7.

Le procédé de déchargement selon l'invention peut avantageusement présenter les particularités suivantes :
- on utilise au moins une barre d'extraction couplée à la zone de déchargement que l'on translate entre une position entrée dans laquelle elle est escamotée sous la zone de déchargement et une position sortie dans laquelle elle s'étend au-delà de la zone de déchargement à l'opposé de la zone de stockage, on utilise un caisson dont la paroi de fond comporte au moins une rainure de fond apte à recevoir la barre d'extraction entre ses positions entrée et sortie de sorte que la barre d'extraction passe sous les objets plats empilés dans le caisson, on utilise un caisson dont la paroi d'extrémité comporte au moins une fente d'extrémité s'étendant de la paroi de fond et débouchant en haut de la paroi d'extrémité, la fente d'extrémité étant apte à autoriser le passage de la barre d'extraction entre ses positions entrée et sortie et entre les positions de transfert et de déchargement de la zone de déchargement, et on réalise successivement les étapes suivantes :
- un premier déplacement de la zone de déchargement de sa position de transfert dans sa position de déchargement,
- dans la position de déchargement de la zone de déchargement, une première translation de la barre d'extraction de sa position entrée à sa position sortie de sorte que la barre d'extraction traverse la fente d'extrémité et soit reçue dans la rainure de fond de sorte à passer sous les objets plats empilés dans le caisson,
- un second déplacement de la zone de déchargement de sa position de déchargement à sa position de transfert, la barre d'extraction étant dans sa position sortie et coulissant dans la fente d'extrémité en se dégageant de la rainure de fond de manière à soulever la pile d'objets plats,
- une seconde translation de la barre d'extraction portant la pile d'objets plats de sa position sortie à sa position entrée avec translation simultanée de la pile d'objets plats vers la zone de déchargement,
- un transfert final de la pile d'objets plats de la zone de déchargement à la zone de stockage ;
- pendant les étapes de second déplacement de la zone de déchargement et de seconde translation de la barre d'extraction, on retient et on accompagne l'avant de la pile d'objets plats au moyen d'une butée avant, et pour réaliser l'étape de transfert final de la pile d'objets plats vers la zone de stockage, on escamote la butée avant ;
- pendant les étapes de second déplacement de la zone de déchargement et de seconde translation de la barre d'extraction et de transfert final de la pile d'objets plats vers la zone de stockage, on retient et on accompagne l'arrière de la pile d'objets plats au moyen d'une palette principale mobile en translation.

### Description sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la figure 1 est une vue de coté d'une partie de l'installation de traitement selon l'invention comportant une première unité de stockage et un chariot de transport, cette figure illustrant l'étape de chargement des objets plats empilés sur chant de la première unité de stockage au chariot de transport ;
- les figures 2 à 9 sont des vues en perspective d'une partie de l'installation de traitement selon l'invention comportant une seconde unité de stockage et le chariot de transport, ces figures illustrant les étapes de déchargement des objets plats empilés sur chant du chariot de transport vers la seconde unité de stockage ;
- les figures 10 à 17 sont des vues schématiques de coté de la partie de l'installation de traitement des figures 2 à 9 illustrant les étapes successives du procédé de déchargement des objets plats selon l'invention, du chariot de transport vers la seconde unité de stockage ;
- la figure 18 est une vue en perspective d'un chariot de transport de l'installation de traitement selon l'invention.

### Description du mode de réalisation

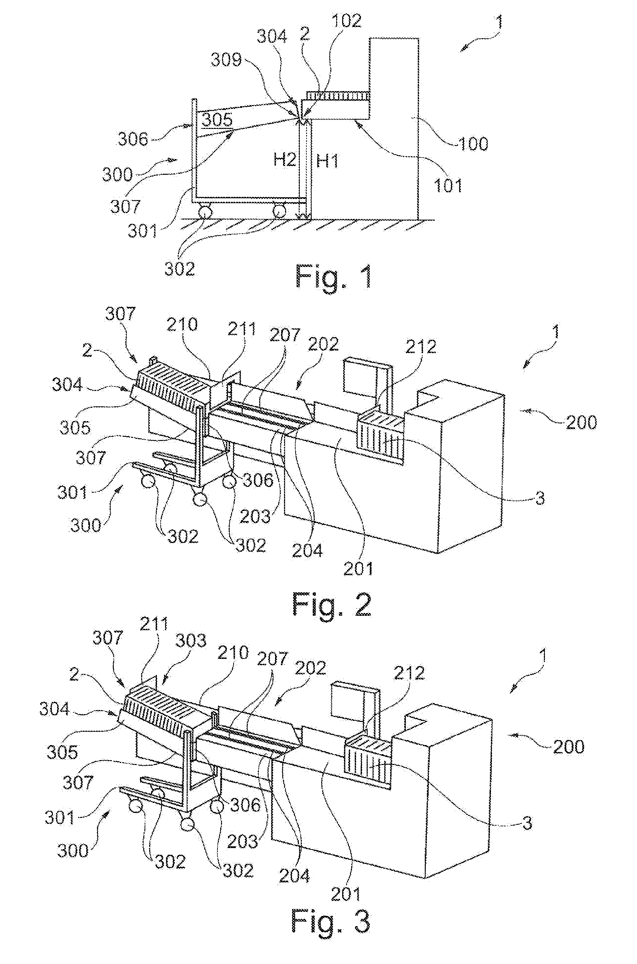

En référence aux figures 1 à 18, l'Installation de traitement 1 d'objets plats 2 empilés sur chant comporte une première unité de stockage 100 (figure 1), une seconde unité de stockage 200 (figures 2 à 17) et un chariot de transport 300 (figures 1 à 18).

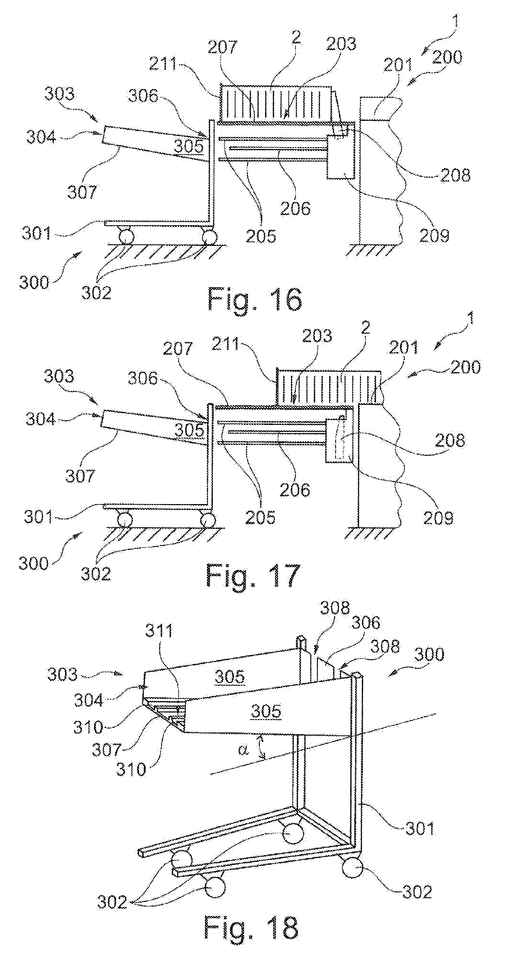

En référence en particulier à la figure 18, le chariot de transport 300 selon l'invention est de type chariot à roues. Le chariot de transport peut également être de tout autre type. Le chariot de transport 300 comporte une ossature 301 portée par quatre roues 302 et un caisson 303 porté par l'ossature 301 et apte à recevoir des objets plats 2, empilés sur chant pour les transporter entre la première unité de stockage 100 et la seconde unité de stockage 200. Le caisson 303 comporte une paroi de fond 307 de laquelle s'étendent deux parois latérales 305 reliées par une paroi d'extrémité 306 en regard de laquelle une ouverture 304 est prévue. La paroi de fond 307 est destinée à recevoir le chant des objets plats 2, la paroi d'extrémité 306 à recevoir la face de l'objet plat 2 à l'avant d'une pile d'objets plats 2. Les parois latérales 305 permettent de s'assurer du bon calage de la pile d'objets plats 2 et de son maintien dans le caisson 303 lors du déplacement du chariot de transport 300.

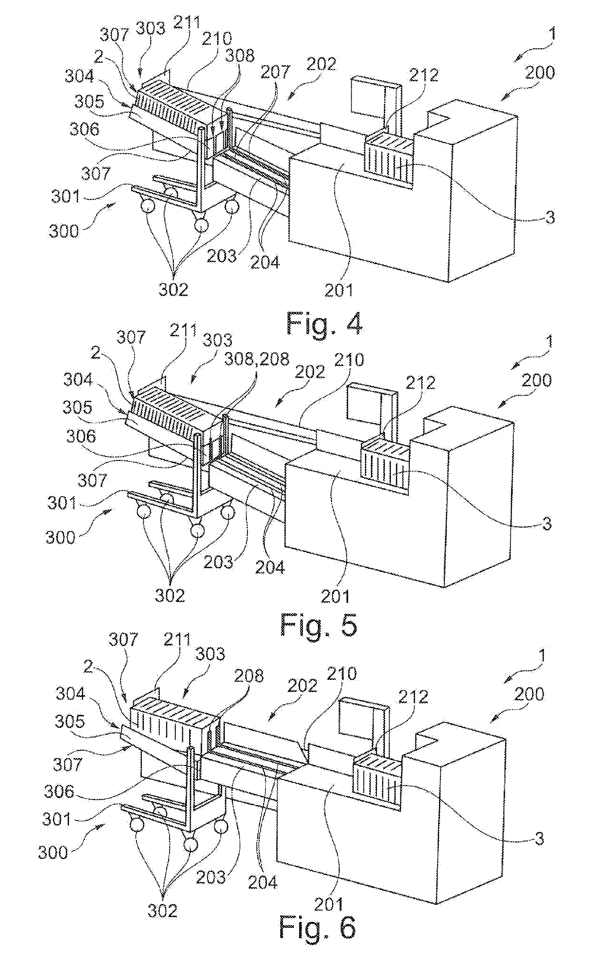

Dans l'exemple illustré, la paroi d'extrémité 306 est traversée par deux fentes d'extrémité 308 (visibles sur les figures 4 et 5 et 18) s'étendant de la paroi de fond 307 et débouchant en haut de la paroi d'extrémité 306. Ces fentes d'extrémités 308 sont sensiblement parallèles entre elles et perpendiculaires à la paroi de fond 307. Comme détaillé plus loin, ces fentes d'extrémité 308 sont aptes à autoriser le passage de barres d'extraction vers l'intérieur du caisson 303 pour en extraire les objets plats 2 empilés. Selon une variante de réalisation non représentée, la paroi d'extrémité peut être pourvue d'une seule fente d'extrémité ou d'un nombre de fentes d'extrémité supérieur, coopérant respectivement avec une barre d'extraction unique ou une pluralité de barres d'extraction.

La paroi de fond 307 est inclinée d'un angle α (détaillé sur la figure 18) par rapport à un plan horizontal de sorte qu'une pile d'objets plats 2 sur chant logée dans le caisson 303 se plaque par gravité contre la paroi d'extrémité 306, améliorant la stabilité de la pile d'objets plats 2 et limitant les risques de basculement et/ou de glissement des objets plats 2 en dehors du caisson 303. L'angle α est par exemple compris entre 9° et 11 °, et de préférence égal à 10°. Par ailleurs, la paroi de fond 307 comporte deux rainures de fond 310 (visibles sur la figure 18) et une rainure centrale 311, sensiblement parallèles entre elles et perpendiculaires à la paroi d'extrémité 306. Les rainures de fond 310 sont prévues dans le prolongement des fentes d'extrémités 308. Ainsi, comme détaillé plus loin, ces rainures de fond 310 sont aptes à recevoir des barres d'extraction insérée dans le caisson 303 pour extraire les objets plats 2 empilés. La rainure centrale 311 prévue entre les rainures de fond 310 présente une largeur supérieure à celles des rainures de fond 310 pour autoriser le passage de la main d'un opérateur accompagnant les objets plats 2 lors du remplissage du chariot de transport 300. Selon une variante de réalisation non représentée, la paroi de fond peut être pourvue d'un nombre de rainures de fond supérieur coopérant avec une pluralité de barres d'extraction. De plus, les rainures de fond peuvent se présenter sous la forme de fentes traversant la paroi de fond.

Parmi ses quatre roues 302, le chariot de transport 300 peut comporter au moins deux roues orientables. De plus, le caisson 303 peut être déplaçable entre une position de travail dans laquelle il est apte à recevoir la pile d'objets plats 2 pour la transporter et une position repos (non représentée) dans laquelle il est basculé contre les montants verticaux de l'ossature 301 de sorte à réduire l'encombrement du chariot de transport 300. De manière avantageuse, l'installation de traitement 1 selon l'invention comporte plusieurs chariots de transport 300. Les ossatures 301 des chariots de transport 300 sont de préférence agencées pour avoir une forme globalement trapézoïdale de sorte à autoriser l'encastrement des chariots de transport 300 les uns dans les autres pour former, lorsque les caissons 303 sont en position repos, un train de chariots au repos. Les chariots de transport 300 peuvent être pourvus de premiers moyens d'ancrage (non représentés) aptes à solidariser les chariots de transport 300 les uns aux autres pour former, lorsque les caissons 303 sont en position repos, un train de chariot au repos. Les chariots de transport 300 peuvent également être pourvus de seconds moyens d'ancrage (non représentés) aptes à solidariser les chariots de transport 300 les uns avec les autres pour former, lorsque les caissons 303 sont en position de travail, un train de chariots au travail. Les chariots de transport 300 peuvent ainsi être déplacés en train de chariots au travail ou train de chariots au repos. Pour faciliter ces déplacements groupés des chariots de transport 300, la liberté d'orientation d'une partie des roues 302 orientables peut être provisoirement condamnée par tout moyen adapté. Par ailleurs une ou plusieurs roues 302 de chaque chariot de transport 300 peut être équipée d'un frein (non représenté) permettant d'immobiliser le chariot de transport 300 à un endroit spécifique. Enfin, les chariots de transport 300 peuvent comporter des moyens d'ancrage (non représentés) aptes à solidariser le chariot de transport 300 à l'une des première, seconde unités de stockage 100, 200 pendant respectivement le chargement, le déchargement de la pile d'objets plats 2 dans et hors du caisson 303.

En référence à la figure 1, la première unité de stockage 100 comporte une zone de chargement 101 apte à recevoir une pile d'objets plats 2 sur chant, avant chargement sur un chariot de transport 300. Cette zone de chargement 101 est par exemple horizontale. Elle peut également être inclinée. L'extrémité libre 102 de la zone de chargement 101, en regard de laquelle un chariot de transport 300 peut être placé pour charger dans son caisson 303 les objets plats 2, est prévue à une première hauteur H1 (visible sur la figure 1) au moins égale à la seconde hauteur H2 (visible sur la figure 1) de l'arête basse 309 de l'ouverture 304. Ainsi, le chant des objets plats 2 stockés sur la zone de chargement 101 est à une hauteur au moins égale à celle de l'extrémité de la paroi de fond 307, autorisant le chargement par glissement des objets plats 2 empilés, de la zone de chargement 101 à l'intérieur du caisson 303, sans devoir être soulevés.

En référence aux figures 2 à 17, la seconde unité de stockage 200 comporte une zone de stockage 201 apte à recevoir la pile d'objets plats 2 sur chant après transport au moyen du chariot de transport 300 et le déchargement de cette pile. La seconde unité de stockage 200 comporte un module de déchargement 202 pourvu d'une zone de déchargement 203 apte à recevoir la pile d'objets plats 2 sur chant déchargée du chariot de transport 300 et à déplacer vers la zone de stockage 201. Cette zone de déchargement 203 peut comporter deux fentes de déchargement 204 sensiblement parallèles entre elles dont la fonction est détaillée plus loin. Le module de chargement 202 est mobile entre une position de transfert (visible sur les figures 2, 3, 6 à 11 et 14 à 17) dans laquelle la zone de déchargement 203 est sensiblement coplanaire avec la zone de stockage 201, et une position de déchargement (visible sur les figures figures 4, 5, 12 et 13) dans laquelle la zone de déchargement 203 est sensiblement coplanaire avec la paroi de fond 307 d'un chariot de transport 300 placé en regard de la zone de déchargement 203. Ainsi, dans la position de transfert, les objets plats 2 empilés présents sur la zone de déchargement 203 peuvent être déplacés vers la zone de stockage 201 par simple glissement.

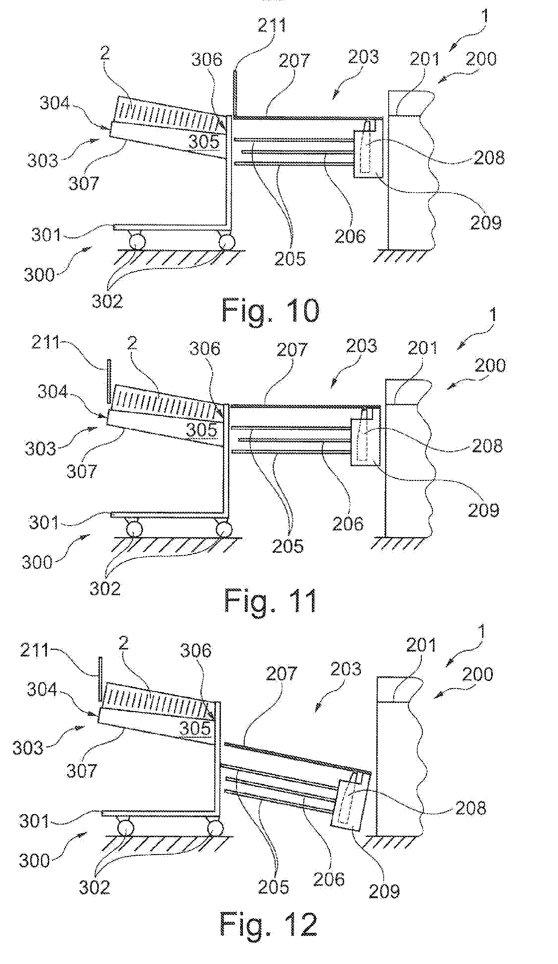

En référence aux figures 10 à 17, le module de déchargement 202 comporte une platine 209 montée coulissante sur deux tiges de guidage 205 par rapport auxquelles la platine 209 est déplacée par exemple au moyen d'une tige filetée 206 de type sans fin motorisée et d'un écrou (non représenté) couplé à la platine 209. De plus, le module de déchargement 202 comporte deux barres d'extraction 207 sensiblement parallèles entre elles et à la zone de déchargement 203, et portées par la platine 209. Les barres d'extraction 207 sont ainsi mobiles en translation par rapport aux tiges de guidage 205 entre une position entrée (visible sur les figures 2 à 4, 7 à 12 et 15 à 17) dans laquelle elles sont escamotées sous la zone de déchargement 203 et une position sortie (visible sur les figures 5, 6, 13 et 14) dans laquelle elles s'étendent au-delà de la zone de déchargement 203. Les barres d'extraction 207 sont prévues en regard des fentes de déchargement 204 de sorte que les barres d'extraction 207 affleurent individuellement la zone de déchargement 203 au travers des fentes de déchargement 204.

Le module de déchargement 202 comporte par ailleurs deux butées avant 208 portées par la platine 209 et prévues en regard des fentes de déchargement 204. Les butées avant 208 sont mobiles par rapport à la platine 209 entre une position inactive dans laquelle elles sont escamotées sous la zone de déchargement 203 et une position active dans laquelle elles dépassent au-dessus de la zone de déchargement 203, sensiblement perpendiculairement à la zone de déchargement 203. Les butées avant 208 sont couplées en translation aux barres d'extraction 207. Ainsi, comme détaillé plus loin, elles servent d'appui à l'avant de la pile d'objets plats 2 lors de son déchargement vers la zone de stockage 201.

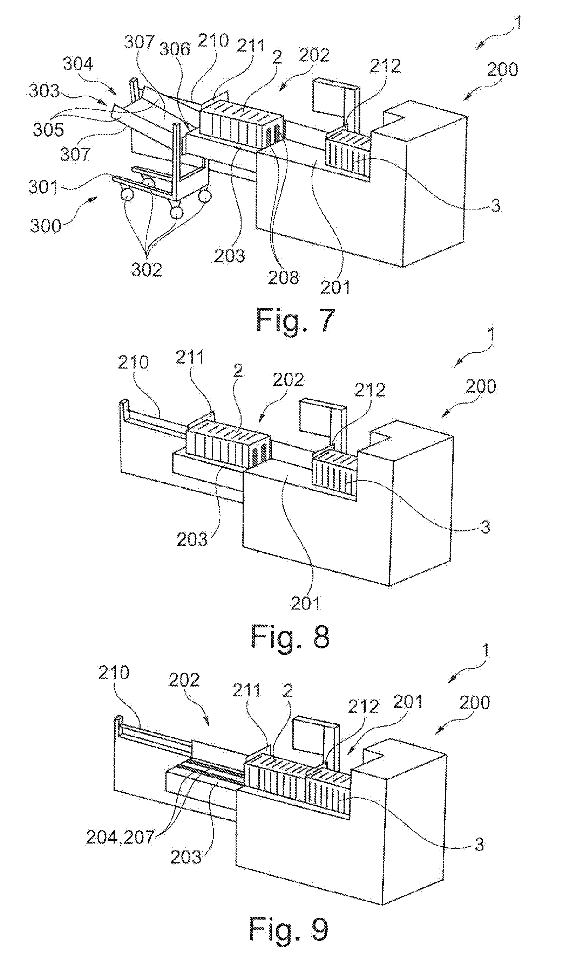

La seconde unité de stockage 200 comporte en outre une glissière 210 (visible sur les figures 2 à 9) s'étendant parallèlement à la zone de stockage 201, en amont du chariot de transport 300 placé en regard de la zone de déchargement 203, vers la zone de stockage 201. Cette glissière 210 porte une palette principale 211 mobile en translation entre une position avant déchargement (visible sur les figures 3 à 6 et 13, 14) dans laquelle elle est à l'arrière de la pile d'objets plats 2 portée par le chariot de transport 300 et une position de transfert (visible sur la figure 9) dans laquelle elle est au-dessus de la zone de déchargement en passant par une position intermédiaire (visible sur les figures 7 et 8, 15 à 17).

En référence à la figure 1, les objets plats 2 peuvent être stockés sur la zone de chargement 101 de la première unité de stockage 100. Pour transférer la pile d'objets plats 2 de la première unité de stockage 100 à la seconde unité de stockage 200, on utilise un chariot de transport 300 tel que décrit précédemment. Pour charger la pile d'objets plats 2 dans le chariot de transport 300, on place le chariot de transport 300 devant la zone de chargement 101 de sorte que l'ouverture 304 du caisson 303 soit directement en regard de la zone de chargement 101. Par glissement, ou par porter-glisser, on déplace les objets plats 2 empilés de la zone de chargement 101 à l'intérieur du caisson 303. Une fois dans le caisson 303, la pile d'objets plats 2 est plaquée par gravité contre la paroi d'extrémité 306. On transporte ensuite les objets plats 2 empilés vers la seconde unité de stockage 200.

Les étapes du procédé de déchargement selon l'invention, de la pile d'objets plats 2 transportée par le chariot de transport 300 vers la zone de stockage 203 de la seconde unité de stockage 200, sont décrites ci-après.

En référence aux figures 2 et 10, une pile précédente d'objets plats 3 peut être stockée sur la zone de stockage 201 de la seconde unité de stockage 200, l'arrière de cette pile précédente d'objets plats 3 étant maintenue par une palette secondaire 212. On place le chariot de transport 300 devant la zone de déchargement 203 de sorte que la paroi d'extrémité 307 du caisson 303 soit directement en regard de la zone de déchargement 203. Dans cette configuration, la zone de déchargement 203 est dans sa position de transfert, les barres d'extraction 207 sont dans leurs positions entrée, les butées avant 208 sont dans leurs positions inactive, la palette principale 211 est dans sa position intermédiaire.

En référence aux figures 3 et 11, on déplace la palette principale 211 de sa position intermédiaire à sa position avant déchargement. Dans la configuration obtenue après déplacement, la zone de déchargement 203 est dans sa position de transfert, les barres d'extraction 207 sont dans leurs positions entrée, les butées avant 208 sont dans leurs positions inactives.

En référence aux figures 4 et 12, on réalise un premier déplacement de la zone de déchargement 203 de sa positions de transfert dans sa position de déchargement de sorte que la zone de déchargement 203 soit sensiblement coplanaire à la paroi de fond 307 du caisson 303, les barres d'extraction 207 étant en regard des rainures de fond 310. Dans la configuration obtenue après déplacement, les barres d'extraction 207 sont dans leurs positions entrée, les butées avant 208 sont dans leurs positions inactive, la palette principale 211 est dans sa position avant déchargement dans laquelle elle retient l'arrière de la pile d'objets plats 2.

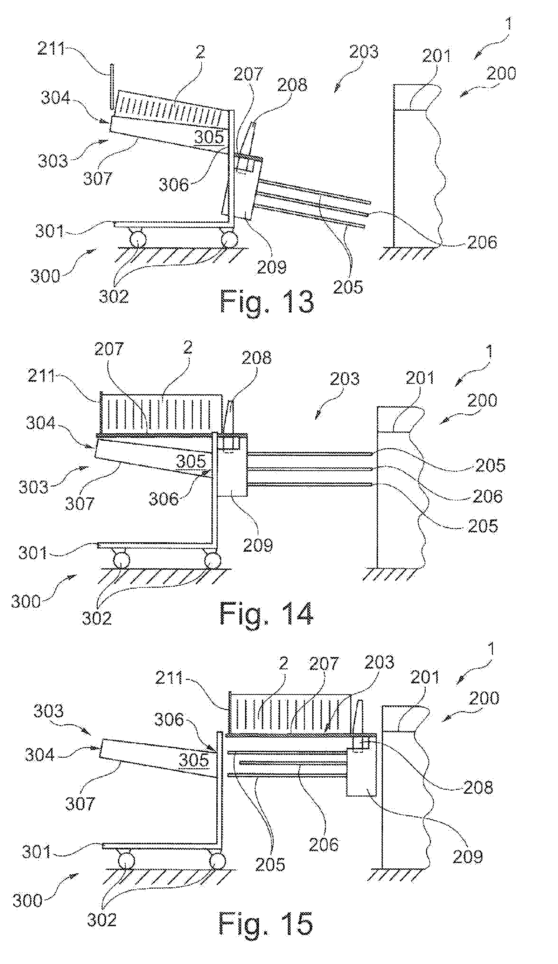

En référence aux figures 5 et 13, on déplace les butées avant 208 de leur position inactive vers leur position active et simultanément ou successivement on réalise une première translation de la platine 209 portant les barres d'extraction 207 et les butées avant 208 de sa position entrée à sa position sortie. Pendant cette étape, les barres d'extraction 207 pénètrent dans le caisson 303. Elles traversent les fentes d'extrémité 308 et se logent progressivement dans les rainures de fond 310 en passant entre la paroi de fond 307 et le chant des objets plats 2 empilés en appui sur la paroi de fond 307. Les butées avant 208 traversent les fentes de déchargement 204 pour être aptes à retenir l'avant de la pile d'objets plats 2. Dans la configuration obtenue après déplacement, les barres d'extraction 207 sont sous les objets plats 2 empilés, la zone de déchargement 203 est dans sa position de déchargement, les butées avant 208 sont dans leurs positions active dans laquelle elles sont aptes à retenir l'avant de la pile d'objets plats 2, la palette principale 211 est dans sa position avant déchargement dans laquelle elle retient l'arrière de la pile d'objets plats 2.

En référence aux figures 6 et 14, on réalise un second déplacement de la zone de déchargement 203 de sa position de déchargement à sa position de transfert de sorte que les objets plats 2 soient en appui sur les barres d'extraction 207, maintenus à l'arrière par la palette principale 211, à l'avant par les butées avant 208. Lors de ce déplacement, les barres d'extraction 207 se déplacent dans les fentes d'extrémité 308, les butées avant 208 accompagnent et retiennent l'avant de la pile d'objets plats 2, la palette principale 211 retient l'arrière de la pile d'objets plats 2. Dans la configuration obtenue après déplacement, les barres d'extraction 207 sont dans leurs positions sortie, les butées avant 208 sont dans leurs positions actives, la palette principale 211 est dans sa position avant déchargement.

En référence aux figures 7 et 15, on réalise une seconde translation de la platine 209 portant les barres d'extraction 207 et les butées avant 208 de la position sortie à la position entrée de sorte à déplacer les objets plats 2 empilés vers le dessus de la zone de déchargement 203. Pendant cette seconde translation, on accompagne au moyen de la palette principale 211 l'arrière de la pile d'objets plats 2 qui est retenue pendant le passage de la palette principale 211 de sa positon avant déchargement à sa position intermédiaire. On accompagne et on retient l'avant de la pile au moyen des butées avant 208. Dans la configuration obtenue après déplacement, la zone de déchargement 203 est dans sa position de déchargement, les barres d'extraction 207 sont dans leur position entrée, les butées avant 208 sont dans leur position active, la palette principale 211 est dans sa position intermédiaire.

En référence à la figure 16, on incline les butées avant 208 de sorte à incliner l'avant de la pile d'objets plats 2 pour favoriser son empilage correct avec une pile précédente d'objets plats 3 déjà présente dans la zone de stockage 201. Cette étape est optionnelle et la pile d'objets plats 2 peut être déplacée vers la pile précédente d'objets plats 3 sans être préalablement inclinée.

En référence à la figure 8, on escamote les butées avant 208 en les faisant passer de leur position active à leur position inactive.

En référence à la figure 17, on effectue un transfert final en déplaçant la pile d'objets plats 2 de la zone de déchargement 203 vers la zone de stockage 201, au-dessus des butées avant 208 escamotées, jusqu'à atteindre la configuration de la figure 9 dans laquelle la pile d'objets plats 2 est entièrement dans la zone de stockage 201, à l'arrière d'une palette secondaire 212 retenant la pile précédente d'objets plats 3. Dans cette configuration, la zone de déchargement 203 est dans sa position de transfert, les barres d'extraction 207 sont dans leur position entrée, les butées avant 208 sont dans leur position inactive, la palette principale 211 est dans sa position de transfert.

Ensuite, on retire la palette secondaire 212 d'entre les deux piles d'objets plats 2, 3 et on la place à l'arrière de la pile d'objets plats 2 nouvellement reçue sur la zone de stockage 201 et on déplace la palette principale 211 de sa position de transfert à sa position intermédiaire. L'installation de traitement 1 est alors prête à recevoir une autre pile d'objets plats transportée par un chariot de transport 300.

Selon un mode de réalisation avantageux non représenté, la paroi d'extrémité est traversée par quatre fentes d'extrémité et le module de chargement de la seconde unité de stockage comporte quatre barres d'extraction apte à traverser les fentes pour le déchargement des objets plats du caisson. Le poids des objets plats peut ainsi être réparti sur les quatre barres d'extraction ce qui limite les risques de détérioration de ces objets plats.

L'installation de traitement 1 selon l'invention comporte avantageusement des moyens de motorisation pour le déplacement de la zone de déchargement 203, de la platine 209 et éventuellement de la palette principale 211. Elle permet de facilement transférer une pile d'objets plats 2 de la première unité de stockage 100 au chariot de transport 300 et du chariot de transport 300 à la seconde unité de stockage 200 en facilitant les mouvements de l'opérateur, limitant les efforts qu'il doit fournir et de les réaliser dans de meilleures conditions ergonomiques. Le procédé de déchargement est ainsi plus fiable et d'un rendement supérieur.

## Revendications

1. Installation de traitement (1) d'objets plats (2) empilés sur chant comportant au moins une première et une seconde unité de stockage (100, 200), un chariot de transport (300) pourvu d'au moins un caisson (303) apte à recevoir lesdits objets plats (2) pour les transporter entre lesdites première et seconde unités de stockage (100, 200), lesdites première et seconde unités de stockage (100, 200) comportant respectivement au moins une zone de chargement (101), une zone de stockage (201), chacune apte à recevoir une pile d'objets plats (2) sur chant avant, après transport, ledit caisson (303) comportant une paroi de fond (307) de laquelle s'étend au moins une paroi d'extrémité (306) en regard de laquelle une ouverture (304) est prévue, ladite paroi de fond (307) étant inclinée de sorte que ladite pile d'objets plats (2) soit, par gravité, en appui contre ladite paroi d'extrémité (306), **caractérisée en ce que** ladite installation de traitement (1) comporte au moins une zone de déchargement (203) prévue en amont de ladite zone de stockage (201), ladite zone de déchargement (203) étant apte à recevoir lesdits objets plats (2) sur chant et mobile entre une position de transfert dans laquelle elle est sensiblement coplanaire avec ladite zone de stockage (201) et une position de déchargement dans laquelle elle est destinée à être sensiblement coplanaire avec ladite paroi de fond (307) du chariot de transport (300) placé de sorte que sa paroi d'extrémité (306) soit en regard de ladite zone de déchargement (203), à l'opposée de ladite zone de stockage (201).

2. installation de traitement (1) selon la revendication précédente, **caractérisée en ce qu'**elle comporte au moins une barre d'extraction (207) couplée à ladite zone de déchargement (203) par rapport à laquelle elle est montée mobile en translation entre une position entrée dans laquelle elle est au moins en partie escamotée sous ladite zone de déchargement (203) et une position sortie dans laquelle elle s'étend au-delà de ladite zone de déchargement (203) à l'opposé de ladite zone de stockage (201), **en ce que** ladite paroi de fond (307) comporte au moins une rainure de fond (310) apte à recevoir ladite barre d'extraction (207) entre ses positions entrée et sortie de sorte que ladite barre d'extraction (207) passe sous lesdits objets plats (2) empilés dans ledit caisson (303), **en ce que** ladite paroi d'extrémité (306) comporte au moins une fente d'extrémité (308) s'étendant de ladite paroi de fond (307) et débouchant en haut de ladite paroi d'extrémité (306), ladite fente d'extrémité (308) étant apte à autoriser le passage de ladite barre d'extraction (207) entre ses positions entrée et sortie et entre lesdites positions de transfert et de déchargement de ladite zone de déchargement (203).

3. installation de traitement (1) selon la revendication précédente, **caractérisée en ce qu'**elle comporte au moins une butée avant (208) couplée en translation à ladite barre d'extraction (207) et mobile entre une position inactive dans laquelle ladite butée avant (208) est au moins en partie escamotée sous ladite zone de déchargement (203) et une position active dans laquelle ladite butée avant (208) dépasse au-dessus de ladite zone de déchargement (203) pour servir d'appui à l'avant de ladite pile d'objets plats (2).

4. Installation de traitement (1) selon la revendication précédente, **caractérisée en ce que** ladite zone de déchargement (203) est traversée par au moins une fente de déchargement (204) prévue en regard de ladite barre d'extraction (207) de sorte que ladite barre d'extraction (207) soit apte à au moins affleurer ladite zone de déchargement (203) dans ladite position entrée de ladite barre d'extraction (207), ladite fente de déchargement (204) autorisant le passage de ladite butée avant (208) dans sa position active entre les positions entrée et sortie de ladite barre d'extraction (207).

5. installation de traitement (1) selon la revendication précédente, **caractérisée en ce que** ladite seconde unité de stockage (200) comporte au moins une palette principale (211) mobile en translation, dans un plan sensiblement parallèle à ladite zone de stockage (201), entre une position avant déchargement dans laquelle elle est apte à être plaquée à l'arrière de ladite pile d'objets plats (2) portée par un chariot de transport (300) placé en regard de ladite zone de déchargement (203) et une position de transfert dans laquelle elle est au-dessus de ladite zone de stockage (201)

6. Installation de traitement (1) selon la revendication précédente, **caractérisée en ce que** l'extrémité libre de ladite zone de chargement (101) de ladite première unité de stockage (100) en regard de laquelle le chariot de transport (300) peut être placé, est prévue à une première hauteur (H1) au moins égale à la seconde hauteur (H2) de la base de ladite ouverture (304) dudit caisson (303) de sorte que ladite pile d'objets plats (2) puisse être chargée dans ledit caisson (303) sans être soulevée.

7. Procédé de déchargement d'objets plats (2) empilés sur chant au cours duquel, avant son transport, on stocke la pile d'objet plats (2) sur une zone de chargement (101), puis on charge ladite pile d'objet plats (2) sur un chariot de transport (300) pourvu d'au moins un caisson (303) apte à recevoir lesdits objets plats (2) empilés sur chant et comportant une paroi de fond (307) de laquelle s'étendent une paroi d'extrémité (306) en regard de laquelle une ouverture (304) est prévue, puis on transporte ladite pile d'objets plats (2) au moyen dudit chariot (300), on décharge ladite pile d'objets plats (2) et on la place sur une zone de stockage (201), puis on utilise un chariot de transport (300) dont ladite paroi de fond (307) est inclinée de sorte que ladite pile d'objets plats (2) soit par gravité en appui contre ladite paroi d'extrémité (306), **caractérisé en ce que** pour décharger lesdits objets plats dudit chariot de transport (300) on utilise une zone de déchargement (203) prévue en amont de ladite zone de stockage (201), **en ce que** l'on place ledit chariot de transport (300) de sorte que sa paroi d'extrémité (306) soit en regard avec l'extrémité libre de ladite zone de déchargement (203) opposée à ladite zone de stockage (201), et **en ce que** l'on incline ladite zone de déchargement (203) d'une position de transfert dans laquelle elle est sensiblement coplanaire avec ladite zone de stockage (201) et une position de déchargement dans laquelle elle est sensiblement coplanaire avec ladite paroi de fond (307) dudit chariot de transport (300).

8. Procédé de déchargement selon la revendication précédente, **caractérisé en ce que** l'on utilise au moins une barre d'extraction (207) couplée à ladite zone de déchargement (203) que l'on translate entre une position entrée dans laquelle elle est escamotée sous ladite zone de déchargement (203) et une position sortie dans laquelle elle s'étend au-delà de ladite zone de déchargement (203) à l'opposé de ladite zone de stockage (201), **en ce que** l'on utilise un caisson (303) dont ladite paroi de fond (307) comporte au moins une rainure de fond (310) apte à recevoir ladite barre d'extraction (207) entre ses positions entrée et sortie de sorte que ladite barre d'extraction (207) passe sous lesdits objets plats (2) empilés dans ledit caisson (303), **en ce que** l'on utilise un caisson (303) dont ladite paroi d'extrémité (306) comporte au moins une fente d'extrémité (308) s'étendant de ladite paroi de fond (307) et débouchant en haut de ladite paroi d'extrémité (306), ladite fente d'extrémité (308) étant apte à autoriser le passage de ladite barre d'extraction (207) entre ses positions entrée et sortie et entre lesdites positions de transfert et de déchargement de ladite zone de déchargement (203), et **en ce que** l'on réalise successivement lesdites étapes suivantes :
- un premier déplacement de ladite zone de déchargement (203) de sa position de transfert dans sa position de déchargement,
- dans ladite position de déchargement de ladite zone de déchargement (203), une première translation de ladite barre d'extraction (207) de sa position entrée à sa position sortie de sorte que ladite barre d'extraction (207) traverse ladite fente d'extrémité (308) et soit reçue dans ladite rainure de fond (310) de sorte à passer sous lesdits objets plats (2) empilés dans ledit caisson (303),
- un second déplacement de ladite zone de déchargement (203) de sa position de déchargement à sa position de transfert, ladite barre d'extraction (207) étant dans sa position sortie et coulissant dans ladite fente d'extrémité (308) en se dégageant de ladite rainure de fond (310) de manière à soulever ladite pile d'objets plats (2),
- une seconde translation de ladite barre d'extraction (207) portant ladite pile d'objets plats (2) de sa position sortie à sa position entrée avec translation simultanée de ladite pile d'objets plats (2) vers ladite zone de déchargement,
- un transfert final de ladite pile d'objets plats (2) de ladite zone de déchargement (203) à ladite zone de stockage (201).

9. Procédé de déchargement selon la revendication précédente, **caractérisé en ce que** pendant lesdites étapes de second déplacement de ladite zone de déchargement (203) et de seconde translation de ladite barre d'extraction (207), on retient et on accompagne l'avant de ladite pile d'objets plats (2) au moyen d'une butée avant (208), et **en ce que** pour réaliser ladite étape de transfert final de ladite pile d'objets plats (2) vers ladite zone de stockage (201), on escamote ladite butée avant (208).

10. Procédé de déchargement selon au moins la revendication 8, **caractérisé en ce que** pendant lesdites étapes de second déplacement de ladite zone de déchargement (203) et de seconde translation de ladite barre d'extraction (207) et de transfert final de ladite pile d'objets plats (2) vers ladite zone de stockage (201), on retient et on accompagne l'arrière de ladite pile d'objets plats (2) au moyen d'une palette principale (211) mobile en translation.

## Patentansprüche

1. Anlage zur Verarbeitung (1) von hochkant gestapelten flachen Gegenständen (2), umfassend mindestens eine erste und eine zweite Lagereinheit (100, 200), einen Transportwagen (300), der mit mindestens einem Kasten (303) versehen ist, der geeignet ist, die flachen Gegenstände (2) aufzunehmen, um sie zwischen der ersten und der zweiten Lagereinheit (100, 200) zu transportieren, wobei die erste und die zweite Lagereinheit (100, 200) jeweils mindestens einen Ladebereich (101), einen Lagerbereich (201) aufweisen, die jeweils geeignet sind, einen Stapel von hochkantigen flachen Gegenständen (2) vor, nach dem Transport aufzunehmen, wobei der Kasten (303) eine Bodenwand (307) aufweist, von der sich mindestens eine Stirnwand (306) erstreckt, der gegenüber eine Öffnung (304) vorgesehen ist, wobei die Bodenwand (307) derart geneigt ist, dass der Stapel von flachen Gegenständen (2) durch die Schwerkraft gegen die Stirnwand (306) anliegt, **dadurch gekennzeichnet, dass** die Anlage zur Verarbeitung (1) mindestens einen Entladebereich (203) aufweist, der vorgelagert vor dem Lagerbereich (201) vorgesehen ist, wobei der Entladebereich (203) geeignet ist, die flachen Gegenstände (2) hochkant und beweglich zwischen einer Übergangsposition, in der er im Wesentlichen koplanar zu dem Lagerbereich (201) ist, und einer Entladeposition, in der er dazu bestimmt ist, im Wesentlichen koplanar zu der Bodenwand (307) des Transportwagens (300) zu sein, der derart positioniert ist, dass seine Stirnwand (306) im Vergleich zu dem Entladebereich (203) dem Lagerbereich (201) entgegengesetzt ist.

2. Anlage zur Verarbeitung (1) nach dem vorhergehenden Anspruch, **dadurch gekennzeichnet, dass** sie mindestens eine Entnahmestange (207) aufweist, die mit dem Entladebereich (203) gekoppelt ist, gegenüber dem sie zwischen einer Eintrittsposition, in der sie mindestens teilweise unter dem Entladebereich (203) eingefahren ist, und einer Austrittsposition, in der sie sich über den Entladebereich (203) hinaus entgegengesetzt zu dem Lagerbereich (201) erstreckt, verschiebbar angeordnet ist, dass die Bodenwand (307) mindestens eine Bodennut (310) aufweist, die geeignet ist, die Entnahmestange (207) zwischen ihrer Eintrittsposition und ihrer Austrittsposition aufzunehmen, sodass die Entnahmestange (207) unter den flachen Gegenständen (2) durchläuft, die in dem Kasten (303) gestapelt sind, dass die Stirnwand (306) mindestens einen Endschlitz (308) aufweist, der sich von der Bodenwand (307) erstreckt und oberhalb der Stirnwand (306) mündet, wobei der Endschlitz (308) geeignet ist, den Durchgang der Entnahmestange (207) zwischen ihrer Eintrittsposition und ihrer Austrittsposition und zwischen der Übergabeposition und der Entladeposition des Entladebereichs (203) zu ermöglichen.

3. Anlage zur Verarbeitung (1) nach dem vorhergehenden Anspruch, **dadurch gekennzeichnet, dass** sie mindestens einen Vorderanschlag (208) aufweist, der verschiebbar mit der Entnahmestange (207) und beweglich zwischen einer inaktiven Position, in der der Vorderanschlag (208) mindestens teilweise unter dem Entladebereich (203) eingefahren ist, und einer aktiven Position, in der der Vorderanschlag (208) über den Entladebereich (203) hinausgeht, verbunden ist, um als Stütze für die das Vorderteil des Stapels von flachen Gegenständen (2) zu dienen.

4. Anlage zur Verarbeitung (1) nach dem vorhergehenden Anspruch, **dadurch gekennzeichnet, dass** der Entladebereich (203) von mindestens einem Entladeschlitz (204) durchquert ist, der gegenüber der Entnahmestange (207) vorgesehen ist, so dass die Entnahmestange (207) geeignet ist, mindestens mit dem Entladebereich (203) in der Eintrittsposition der Entnahmestange (207) zu fluchten, wobei der Entladeschlitz (204) den Durchgang des Vorderanschlags (208) in seiner aktiven Position zwischen der Eintrittsposition und der Austrittspositionen der Entnahmestange (207) ermöglicht.

5. Anlage zur Verarbeitung (1) nach dem vorhergehenden Anspruch, **dadurch gekennzeichnet, dass** die zweite Lagereinheit (200) mindestens eine Hauptpalette (211) aufweist, die in einer Ebene, die im Wesentlichen parallel zu dem Lagerbereich (201) ist, zwischen einer Position vor dem Entladen, in der sie geeignet ist, an das Rückteil des Stapels von flachen Gegenständen (2) angelegt zu werden, der von einem Transportwagen (300) getragen ist, der gegenüber dem Entladebereich (203) angeordnet ist, und einer Übergangsposition, in der sie über dem Lagerbereich (201) ist, verschiebbar ist.

6. Anlage zur Verarbeitung (1) nach dem vorhergehenden Anspruch, **dadurch gekennzeichnet, dass** das freie Ende des Ladebereichs (101) der ersten Lagereinheit (100) gegenüber der der Transportwagen (300) angeordnet werden kann, in einer ersten Höhe (H1) vorgesehen ist, die mindestens gleich der zweite Höhe (H2) der Basis der Öffnung (304) des Kastens (303) ist, so dass der Stapel von flachen Gegenständen (2) in den Kasten (303) geladen werden kann, ohne dass dieser dazu angehoben werden muss.

7. Verfahren zum Entladen von hochkant gestapelten flachen Gegenständen (2), bei dem vor seinem Transport der Stapel von flachen Gegenständen (2) in einem Entladebereich (101) gelagert wird und dann der Stapel von flachen Gegenständen (2) auf einen Transportwagen (300) geladen wird, der mit mindestens einem Kasten (303) versehen ist, der geeignet ist, die hochkant gestapelten flachen Gegenstände (2) aufzunehmen und eine Bodenwand (307) aufweist, von der sich mindestens eine Stirnwand (306) erstreckt, der gegenüber eine Öffnung (304) vorgesehen ist, und dann der Stapel von flachen Gegenständen (2) mit Hilfe des Wagens (300) transportiert wird und dann der Stapel von flachen Gegenständen (2) entladen wird und in einem Lagerbereich (201) angeordnet wird und dann ein Transportwagen (300) verwendet wird, dessen Bodenwand (307) derart geneigt ist, dass der Stapel von flachen Gegenständen (2) durch die Schwerkraft gegen die Stirnwand (306) anliegt, **dadurch gekennzeichnet, dass** zum Entladen der flachen Gegenstände von dem Transportwagen (300) ein Entladebereich (203) verwendet wird, der vorgelagert vor dem Lagerbereich (201) vorgesehen ist, dass der Transportwagen (300) derart angeordnet wird, dass seine Stirnwand (306) dem freien Ende des Entladebereichs (203) gegenüberliegt, die dem Ladebereich (201) entgegengesetzt ist, und dass der Entladebereich (203) um eine Übergansposition, in der er im Wesentlichen koplanar zu dem Lagerbereich (201) ist, und um eine Entladeposition, in der er dazu bestimmt ist, im Wesentlichen koplanar zu der Bodenwand (307) des Transportwagens (300) zu sein, geneigt wird.

8. Verfahren zum Entladen nach dem vorhergehenden Anspruch, **dadurch gekennzeichnet, dass** mindestens eine Entnahmestange (207) verwendet wird, die mit dem Entladebereich (203) gekoppelt ist, die zwischen einer Eintrittsposition, in der sie mindestens teilweise unter dem Entladebereich (203) eingefahren ist, und einer Austrittsposition, in der sie sich über den Entladebereich (203) hinaus entgegengesetzt zu dem Lagerbereich (201) erstreckt, verschoben wird, dass ein Kasten (303) verwendet wird, dessen Bodenwand (307) mindestens eine Bodennut (310) aufweist, die geeignet ist, die Entnahmestange (207) zwischen ihrer Eintrittsposition und ihrer Austrittsposition aufzunehmen, sodass die Entnahmestange (207) unter den flachen Gegenständen (2) durchläuft, die in dem Kasten (303) gestapelt sind, dass ein Kasten (303) verwendet wird, dessen Stirnwand (306) mindestens einen Endschlitz (308) aufweist, der sich von der Bodenwand (307) erstreckt und oberhalb der Stirnwand (306) mündet, wobei der Endschlitz (308) geeignet ist, den Durchgang der Entnahmestange (207) zwischen ihrer Eintrittsposition und ihrer Austrittsposition und zwischen der Übergängsposition und der Entladeposition des Entladebereichs (203) zu ermöglichen, und dadurch, dass danach die folgenden Schritte durchgeführt werden:
- ein erstes Verschieben des Entladebereichs (203) von seiner Übergangsposition in seine Entladeposition,
- in der Entladeposition des Entladebereichs (203) eine erste Translation der Entnahmestange (207) aus ihrer Eintrittsposition in ihre Austrittsposition, so dass die Entnahmestange (207) den Endschlitz (308) durchquert und in der Bodennut (310) derart aufgenommen wird, dass sie unter den flachen Gegenständen (2) durchläuft, die in dem Kasten (303) gestapelt sind,
- ein zweites Verschieben des Entladebereichs (203) von seiner Entladeposition in seine Übergangsposition, wobei die Entnahmestange (207) in ihrer Austrittsposition ist und verschiebbar in dem Endschlitz (308) ist, indem sie sich aus der Bodennut (310) derart löst, dass sie den Stapel von flachen Gegenständen (2) anhebt,
- eine zweite Translation der Entnahmestange (207), die den Stapel von flachen Gegenständen (2) trägt, aus ihrer Austrittsposition in ihre Eintrittsposition mit gleichzeitiger Translation des Stapels von flachen Gegenständen (2) zu dem Entladebereich,
- ein endgültiger Übergang des Stapels von flachen Gegenständen (2) von dem Entladebereich (203) in den Lagerbereich (201).

9. Verfahren zum Entladen nach dem vorhergehenden Anspruch, **dadurch gekennzeichnet, dass** während der Schritte des zweiten Verschiebens des Entladebereichs (203) und der zweiten Translation der Entnahmestange (207) das Vorderteil des Stapels von flachen Gegenständen (2) mittels eines Vorderanschlags (208) zurückgehalten und begleitet wird und dass zum Durchführen des Schrittes des endgültigen Übergangs des Stapels von flachen Gegenständen (2) zu dem Lagerbereich (201) der Vorderanschlag (208) eingefahren wird.

10. Verfahren zum Entladen nach Anspruch 8, **dadurch gekennzeichnet, dass** während der Schritte des zweiten Verschiebens des Entladebereichs (203) und der zweiten Translation der Entnahmestange (207) und des endgültigen Übergangs des Stapels von flachen Gegenständen (2) zu dem Lagerbereich (201) das Rückteil des Stapels von flachen Gegenständen (2) mittels einer verschiebbaren Hauptpalette (211) zurückgehalten und begleitet wird.

## Claims

1. A handling installation (1) for handling flat articles (2) stacked on edge, the handling installation (1) including at least one first storage unit (100) and at least one second storage unit (200), a transport trolley (300) provided with at least one box (303) suitable for receiving said flat articles (2) so as to transport them between said first and second storage units (100, 200), said first and second storage units (100, 200) respectively having at least one loading zone (101) and at least one storage zone (201), said loading zone being suitable for receiving a stack of flat articles (2) on edge before they are transported, and said storage zone being suitable for receiving a stack of flat articles (2) on edge after they are transported, said box (303) having a bottom wall (307) from which at least one end wall (306) extends, facing which at least one opening (304) is provided, said bottom wall (307) being inclined so that said stack of articles (2) bears against said end wall (306) by gravity, said handling installation being **characterized in that** it has at least one unloading zone (203) provided upstream from said storage zone (201), said unloading zone (203) being suitable for receiving said flat articles (2) on edge and being mounted to move between a transfer position in which it is substantially coplanar with said storage zone (201) and an unloading position in which it is designed to be substantially coplanar with said bottom wall (307) of the transport trolley (300) as placed so that its end wall (306) is facing said unloading zone (203), opposite from said storage zone (201).

2. A handling installation (1) according to the preceding claim, **characterized in that** it has at least one extraction bar (207) coupled to said unloading zone (203) relative to which it is mounted to move in translation between a retracted position in which it is retracted at least in part under said unloading zone (203) and a deployed position in which it extends beyond said unloading zone (203) opposite from said storage zone (201), **in that** said bottom wall (307) is provided with at least one bottom groove (310) suitable for receiving said extraction bar (207) between its retracted and deployed positions so that said extraction bar (207) passes under said flat articles (2) stacked in said box (303), **in that** said end wall (306) is provided with at least one end slot (308) extending from said bottom wall (307) and opening out at the top of the end wall (306), said end slot (308) being suitable for allowing said extraction bar (207) to go between its retracted and deployed positions and between said transfer and unloading positions of said unloading zone (203).

3. A handling installation (1) according to the preceding claim, **characterized in that** it has at least one abutment (208) coupled to move in translation with said extraction bar (207) and mounted to move between an inactive position in which said front abutment (208) is retracted at least in part under said unloading zone (203) and an active position in which said front abutment (208) projects above said unloading zone (203) so as to serve as a bearing surface at the front of said stack of flat articles (2).

4. A handling installation (1) according to the preceding claim, **characterized in that** said unloading zone (203) is provided with at least one through unloading slot (204) provided facing said extraction bar (207) so that said extraction bar (207) is suitable for at least coming flush with said unloading zone (203) when said extraction bar (207) is in said retracted position, said unloading slot (204) allowing said front abutment (208) to go into its active position when the extraction bar (207) is between its retracted and deployed positions.

5. A handling installation (1) according to the preceding claim, **characterized in that** said second storage unit (200) is provided with at least one main paddle (211) mounted to move in translation, in a plane substantially parallel to said storage zone (201), between a prior-to-unloading position in which it is suitable for being pressed behind said stack of flat articles (2) carried by a transport trolley (300) placed facing said unloading zone (203) and a transfer position in which it is above said storage zone (201).

6. A handling installation (1) according to the preceding claim, **characterized in that** the free end of said loading zone (101) of said first storage unit (100) facing which the transport trolley (300) can be placed is provided at a first height (H1) at least equal to the second height (H2) of the base of said opening (304) of said box (303) so that said stack of flat articles (2) can be loaded in said box (303) without being lifted.

7. An unloading method for unloading flat articles (2) stacked on edge, during which, prior to being transported, the stack of flat articles (2) is stored in a loading zone (101), then said stack of flat articles (2) is loaded onto a transport trolley (300) provided with at least one box (303) suitable for receiving said flat articles (2) stacked on edge, and having a bottom wall (307) from which an end wall (306) extends, facing which an opening (304) is provided, then said stack of flat articles (2) is transported by means of said trolley (300), said stack of flat articles (2) is unloaded and it is placed in a storage zone (201), then a transport trolley (300) is used in which said bottom wall (307) is inclined so that said stack of flat articles (2) bears against said end wall (306) by gravity, said method being **characterized in that** in order to unload said flat articles from said transport trolley (300) an unloading zone (203) is used that is provided upstream from said storage zone (201), **in that** said transport trolley (300) is placed so that its end wall (306) is facing the free end of said unloading zone (203) that is opposite from said storage zone (201), and **in that** said unloading zone (203) is inclined from a transfer position in which it is substantially coplanar with said storage zone (201) to an unloading position in which it is substantially coplanar with said bottom wall (307) of said transport trolley (300).

8. An unloading method according to the preceding claim, **characterized in that** at least one extraction bar (207) is used that is coupled to said unloading zone (203) and that is moved in translation between a retracted position in which it is retracted at least in part under said unloading zone (203) and a deployed position in which it extends beyond said unloading zone (203) opposite from said storage zone (201), **in that** a box (303) is used in which said bottom wall (307) is provided with at least one bottom groove (310) suitable for receiving said extraction bar (207) between its retracted and deployed positions so that said extraction bar (207) passes under said flat articles (2) stacked in said box (303), **in that** a box (303) is used in which said end wall (306) is provided with at least one end slot (308) extending from said bottom wall (307) and opening out at the top of the end wall (306), said end slot (308) being suitable for allowing said extraction bar (207) to go between its retracted and deployed positions and between said transfer and unloading positions of said unloading zone (203), and **in that** the following steps are performed in succession:
• a first movement of said unloading zone (203) from its transfer position to its unloading position;
• with said unloading zone (203) in said unloading position, a first movement in translation of said extraction bar (207) from its retracted position to its deployed position so that said extraction bar (207) passes through said end slot (308) and is received in said bottom groove (310) so as to go under said flat articles (2) stacked in said box (303);
• a second movement of said unloading zone (203) from its unloading position to its transfer position, said extraction bar (207) being in its deployed position and sliding in said end slot (308) by disengaging from said bottom groove (310) in such a manner as to lift said stack of flat articles (2);
• a second movement in translation of said extraction bar (207) carrying said stack of flat articles (2) from its deployed position to its retracted position with a simultaneous movement in translation of said stack of flat articles (2) towards said unloading zone; and
• a final transfer of said stack of flat articles (2) from said unloading zone (203) to said storage zone (201).

9. An unloading method according to the preceding claim, **characterized in that**, during said step of the second movement of said unloading zone (203) and during said step of the second movement in translation of said extraction bar (207), the front of said stack of flat articles (2) is retained and accompanied by means of a front abutment (208), and **in that**, in order to perform said step of the final transfer of said stack of flat articles (2) towards said storage zone (201), said front abutment (208) is retracted.

10. An unloading method at least according to claim 8, **characterized in that**, during said step of the second movement of said unloading zone (203), during said step of the second movement in translation of said extraction bar (207), and during the step of the final transfer of said stack of flat articles (2) towards said storage zone (201), the back of said stack of flat articles (2) is retained and accompanied by means of a main paddle (211) that is mounted to move in translation.
